# EUROPEAN PATENT APPLICATION

(11) **EP 0 541 320 A2**
(43) Date of publication of application: **12.05.1993**
(21) Application number: 92310030.9
(22) Date of filing: 02.11.1992
(51) Int. Cl.: H02G 11/02, D06F 79/02

(54) **Cable holders for electric appliances**

(30) Priority: 07.11.1991 GB 9123687
(71) Applicant: MORPHY RICHARDS LIMITED, Mexborough, South Yorkshire S64 8AJ (GB)
(72) Inventor: Corcoran, Michael, Newcastle-upon-Tyne NE2 4RR (GB)
(74) Representative: Houghton, David

(57) **Abstract**

The invention relates to cable holders, particularly for electric domestic appliances such as irons. With such as electric irons where a fixed length cable is provided for the plugged connection of the appliance to mains, can lead to interference between the trailing lead and the article to be ironed. Cordless irons have been evolved but here the iron needs to be returned to its power base for reheating during use with great frequency because of rapid loss of heat. The invention seeks to avoid those disadvantages mentioned above, which objective is met by providing a cable holder having a casing (2, 3) having a first opening (12) therein through which extends a first power cable (13) for connection to a power supply, a second opening (20, 21) therein through which extends a second power cable (22) for connection to the appliance, cable support means (9) within the casing, means (30) to urge the second cable onto the support means, electrical connection means (17, 18, 19, 27, 28, 29) between respective live (14, 24) and neutral (15, 25) and, where provided, earth (16, 26) leads of the first and second cables (13, 22) whereby the second cable (22) can be automatically fed into and out of the casing (2, 3) during use to allow the appliance to be used whilst maintaining the shortest length of cable required during use and maintaining the appropriate electrical connection.

## Description

This invention relates to cable holders for electric applicances power tools and the like, particularly, but not exclusively, for electric irons.

When an electric iron is being used, its power cord tends to tangle or twist and may interfere with the article being ironed. It is known to store the cable on a reel in the handle of an iron, but when the cable is unreeled the same problems are encountered by the user as with a normal corded iron. Cordless irons have also been used where the iron is charged or heated remotely, but these tend to rapidly lose heat and require frequent returning to their power base for re-heating during use.

According to a first aspect of the present invention a cable holder for an electric appliance comprises a casing having a first opening therein through which extends a first power cable for connection to a power supply, a second opening therein through which extends a second power cable for connection to the appliance, cable support means within the casing, means to urge the second cable onto the support means, electrical connection means between respective live and neutral and, where provided, earth leads of the first and second cables whereby the second cable can be automatically fed into and out of the casing during use to allow the appliance to be used whilst maintaining the shortest length of cable required during use and maintainaing the appropriate electrical connection.

The cable holder may be used with any electrical appliance or power tool or the like, particularly those requiring constant power supply and which are generally held by the user during use, such as an electric iron or an electric drill.

Preferably the cable support means is a reel, drum or the like and the means to urge the second cable onto the support means may be a suitable spring such as a power spring, clock spring, coil spring or the like, adapted to rotate the reel about its axis so that the second cable is wound thereon.

The electrical connection between the leads of the cables may be provided by respective contacts, with a first set, attached to the second cable, mounted on the reel and adapted to make continuous electrical connection with a second set of contacts attached to the first cable. The second set of contacts are preferably mounted on to the casing. The second set of contacts may be annular rings of conductive material mounted on to the casing and adapted to make electrical connection with the respective first set of contacts mounted on one side of the reel. Alternatively the annular rings may be connected to the second cable and adapted to make electrical connection with radially spaced respective contacts on the casing.

The casing may be made in two parts comprising a top moulding and a base moulding connected together by screws or welding.

The cable holder may be incorporated either integrally or remotely with an ironing board or table or other suitable surface.

The top of the casing may be adapted to provide a stand for the iron. One such stand may be provided with means so that the iron can be rested, at an angle, on the stand during use so that it can be readily removed from the stand and to improve its stability in a position where steam will not be generated. Said means may be a support projecting upwardly from the stand. The support may be provided with heat resistant material such as a silicon rubber pad for contact with the hot sole plate of the iron. Further heat resistant material such as silicon rubber pads may be provided on the stand for further contact with the sole plate.

Stop means may be provided on the second cable to prevent that cable from being completely retracted into the casing so as to leave sufficient cable between the casing and the appliance to allow the appliance to rest on the stand. The stop means is preferably of a size larger than the said opening in the casing and may be of a suitable elastomeric material such as rubber so that during use the stop means contacts the casing silently. The underside of the casing may be provided with a non-slip surface or non-slip feet to prevent the casing from sliding about. Alternatively means may be provided to fix the casing to an ironing board or table or other surface.

According to a second aspect of the invention of independent significance a stand for an electric appliance comprises a means to secure the appliance to the stand when the appliance is not in use, thereby enabling the appliance to be carried whilst attached to its stand.

The stand may be for any electrical appliance but is preferably for an iron. The means to secure the iron to the stand may comprise at least one slidable locking member housed in a channel in a wall of a recess in the stand. Preferably two locking members are provided in respective channels in opposing walls of the recess. The locking members may engage any peripheral part of the iron but preferably engage in a groove at or adjacent the rear of its handle. The locking members may be manually slid into engagement with the iron, but preferably the recess is provided within a turntable mounted on the stand, above a fixed cam track, each locking member being provided with a cam follower whereby rotation of the turntable in relation to the camtrack causes the locking members to slide into and out of engagement with the iron.

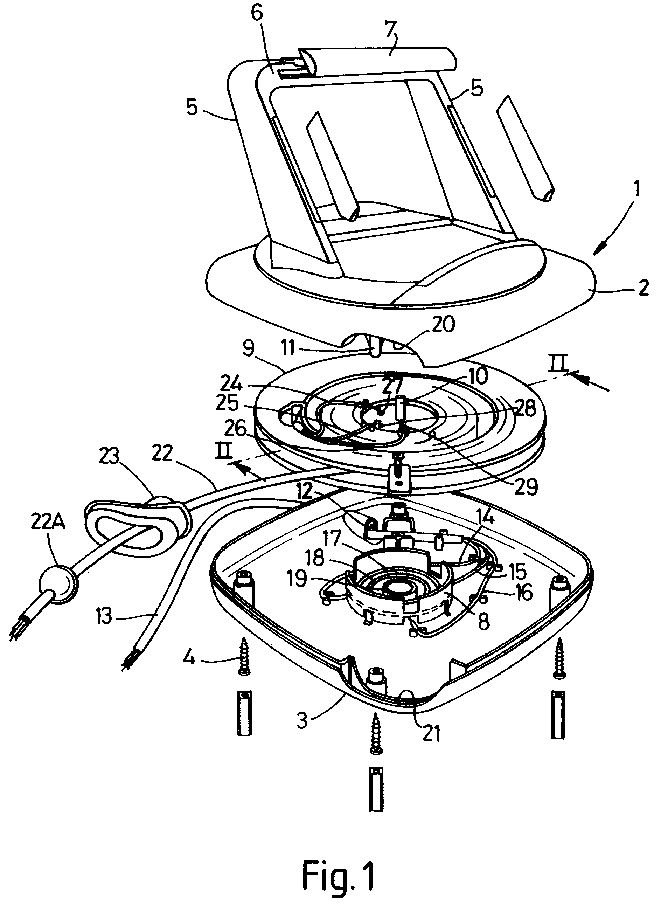

One embodiment of the invention will now be described with reference to the accompanying drawings in which:-
Figure 1 is an exploded perspective view of a stand for an electrical appliance in combination with a cable holder; and

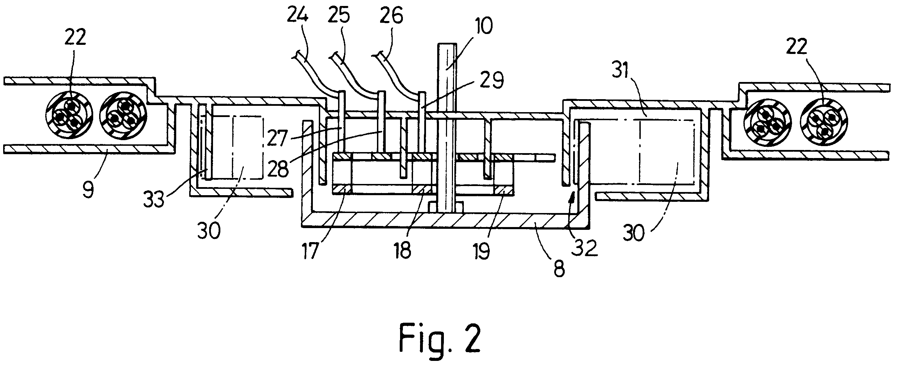

Figure 2 is a cross-sectional side elevation of part of Figure 1 and generally on the line II-II.

In the drawings a stand 1 for an electrical appliance, and here, in particular, an electric iron, has a two-part casing 2, 3 secured together with appropriate locking screws 4. On the upper surface of the casing part 2 are two upright and parallel location members 5 connected by a crossbar 6, and in spaced relation thereto a buttress member 7 is provided. Thus, an electric iron can be positioned on the upper casing part 2 with its sole plate engaging the buttress member 7.

Located on the lower casing member 3 and on its internal face is a contact ring assembly 8 on which is located a cable holder 9 having an axle member 10 to engage in a bearing member 11 located on the inner surface of the upper casing member 2. Also on the lower casing member 3 is an access hole 12 for a mains cable 13, the live lead 14, neutral lead 15 and earth lead 16 of which are respectively secured to contact rings 17, 18, 19. Wound on the cable holder 9 is the electrical lead for connection to the electrical appliance e.g. iron, the upper and lower casing members 2, 3 having co-operating recesses 20, 21, through which the appliance cable 22 extends, there being an exit bush 23 to locate in the co-operating recesses and a cable stop 22A to restrict the degree to which the appliance cable can be wound on to the cable holder.

The live lead 24, neutral lead 25, and earth lead 26 of the appliance cable are respectively connected to contacts 27, 28 and 29 on the cable holder and such that with the cable holder located on the contact ring assembly, the contact 24, 25 and 26 respectively engage the contact rings 17, 18 and 19. Consequently, during a (clockwise) rotation of the cable holder when the appliance cable is pulled outwardly to unwind it from the cable holder, and during an opposite (anti-clockwise) rotation of the cable holder to wind the appliance cable back on to it, electrical contact as between the mains cable 13 and the appliance cable is maintained.

To facilitate the rewinding of the appliance cable back on to the cable holder, a coil spring 30 is provided located in a recess 31 to the underside of the cable holder, the innermost end of the spring engaging a recess 32 on the contact ring assembly 8, and the outermost end of the spring engaging an abutment 33 provided on the casing. Thus, during removal of the cable and the (clockwise) winding of the cable holder the coil spring 30 is tensioned, and when the force on the appliance cable is relaxed the coil spring causes the automatic opposite (anti-clockwise) rotation of the cable holder to rewind the appliance cable back on to it.

The benefit of the invention will readily be perceived particularly when and such as with an iron the appliance is subjected to regular movement away from and towards the cable holder, by ensuring that only the required length of cable extends from the cable holder to the appliance.

## Claims

1. A cable holder for an electric appliance characterised by a casing (2, 3) having a first opening (12) therein through which extends a first power cable (13) for connection to a power supply, a second opening (20, 21) therein through which extends a second power cable (22) for connection to the appliance, cable support means (9) within the casing, means (30) to urge the second cable onto the support means, electrical connection means (17, 18, 19, 27, 28, 29) between respective live (14, 24) and neutral (15, 25) and, where provided, earth (16, 26) leads of the first and second cables (13, 22) whereby the second cable (22) can be automatically fed into and out of the casing (2, 3) during use to allow the appliance to be used whilst maintaining the shortest length of cable required during use and maintaining the appropriate electrical connection.

2. A cable holder as in Claim 1, characterised in that the cable support means (9) is a reel, drum or the like, rotatably mounted within the casing (2, 3).

3. A cable holder as in Claim 1 or Claim 2, characterised in that the means to urge the second cable (22) on to the support means (9) is a suitable spring (30).

4. A cable holder as in any of Claims 1 to 3, characterised in that the electrical connection between the leads of the cables (13, 22) are provided by respective contacts (27, 28, 29) attached to the second cable (22) mounted on the support means (9) that maintain continuous electrical connection with contacts (17, 18, 19) attached to the first cable (13).

5. A cable holder as in Claim 4, characterised in that the contacts (17, 18, 19) are in the form of annular rings of conductive material mounted on the casing (3).

6. A cable holder as in any of Claims 1 to 5, characterised in that the casing is in two parts (2, 3) detachably connected by connecting means (4).

7. A cable holder as in any of Claims 1 to 6, characterised in that the casing (2) is adapted to provide a stand (5, 6, 7) for an electrical appliance.

8. A cable holder as in any of Claims 1 to 7, characterised in that stop means (22A) are provided on the second cable (22) to prevent the cable (22) from complete retraction into the casing.

9. A cable holder as in any of Claims 1 to 8, characterised in that a stand (5, 6 7) for an electric appliance is formed on the casing (2) and provided with means whereby the appliance is secured to the stand when the appliance is not in use and whereby to enable the appliance to be carried with the stand attached.

10. A cable holder as in Claim 9, characterised in that the electrical appliance is a domestic electric iron and the means to secure the iron to the stand comprises at least one slidable locking member housed in a channel in a wall of a recess in the stand, said locking member engaging a peripheral part of the iron and being manually slidable between an operative and an inoperative position.

11. A cable holder as in Claim 9, characterised in that a turntable is provided on the stand and having a recess therein the turntable being mounted above a fixed cam track and there being at least one locking member in the recess and provided with a cam follower whereby rotation of the turntable and the interaction of the cam follower and the cam track being such as to move the at least one locking member between its operative and inoperative positions.
